(19) Europäisches Patentamt
European Patent Office
Office européen des brevets

(11) **EP 2 223 020 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **08852980.5**

(22) Anmeldetag: **19.11.2008**

(51) Int Cl.:
*F24T 10/00* (2018.01)      *F24D 3/08* (2006.01)

(86) Internationale Anmeldenummer:
**PCT/DE2008/001905**

(87) Internationale Veröffentlichungsnummer:
**WO 2009/065387 (28.05.2009 Gazette 2009/22)**

(54) **VERFAHREN ZUR GEWINNUNG VON ERDWÄRME AUS EINEM WASSERVERSORGUNGSNETZ**

METHOD FOR OBTAINING GEOTHERMAL ENERGY FROM A WATER SUPPLY NETWORK

PROCÉDÉ POUR RÉCUPÉRER L'ÉNERGIE GÉOTHERMIQUE À PARTIR D'UN RÉSEAU DE DISTRIBUTION D'EAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.11.2007 DE 102007055652**

(43) Veröffentlichungstag der Anmeldung:
**01.09.2010 Patentblatt 2010/35**

(73) Patentinhaber:
• **Kaus, Arnim**
  **55120 Mainz (DE)**
• **Boening, Wolf**
  **45139 Essen (DE)**

(72) Erfinder:
• **Kaus, Arnim**
  **55120 Mainz (DE)**
• **Boening, Wolf**
  **45139 Essen (DE)**

(74) Vertreter: **Müller, Jochen et al**
**Müller & Aue**
**Patentanwälte**
**Schwester-Steimer-Weg 4**
**55411 Bingen (DE)**

(56) Entgegenhaltungen:
EP-A2- 2 163 828         CA-A1- 2 541 378
DE-A1- 2 834 442         DE-A1- 2 930 484
DE-A1-102008 018 826     US-A- 6 041 613

**Beschreibung**

Die Erfindung bezieht sich auf ein Verfahren zur Gewinnung von Erdwärme aus einem Wasserversorgungsnetz.

Bekannte geothermische Anlagen umfassen Erdwärmesonden, Erdreichkollektoren und Grundwasserbrunnen, die mittels Wärmepumpen Energie, z.B. für Heizzwecke, gewinnen. Hierfür müssen Rohrleitungen mittels aufwendiger Bohr- und Grabungsarbeiten in Bohrlöcher bzw. in den oberflächennahen Untergrund eingebaut werden. Dies erfordert einen entsprechenden Platzbedarf, der in städtischen Bereichen i.d.R. nicht ausreichend vorhanden ist, wobei bestimmte Grenzabstände auf dem Grundstück der Wärmenutzungs-Liegenschaft einzuhalten sind. Darüber hinaus müssen die auf dem Grundstück vorhandenen hydrogeologischen Verhältnisse geeignet sein, um eine entsprechende Genehmigung zur Errichtung einer geothermischen Anlage zu erhalten.

Die US 6 041 613 A offenbart ein Verfahren zur Gewinnung von Erdwärme aus einem Wasserversorgungsnetz, bei dem die Erdwärme durch die Wasservolumenströmung im erdverlegten Wasserversorgungsnetz aufgenommen wird. Ein mit dem Wasserversorgungsnetz gekoppelter Wärmetauscher ist zur stofflichen Trennung des Wasserversorgungsnetzes von einem weiteren mit einer Wärmepumpe gekoppelten Wasserkreislauf angeordnet. In der Wärmepumpe erfolgt dann der Einsatz eines Kältemittels.

Des weiteren ist es aus der CA 2 541 378 A1 bekannt, neben einer Haupt-Versorgungsleitung eine Ringleitung vorzusehen, die einzelne Häuser versorgt. An die Pumpen umfassende Ringleitung sind Wärmetauscher mit gekoppelten Wärmepumpen angeschlossen.

Aus der Praxis und beispielsweise der DE 29 30 484 A1 ist es bekannt über einen Wärmetauscher in einer Quellwasserleitung Energie mittels eines Flüssigkeits-Zwischenkreislaufs einem Wärmepumpen-Verdampfer in einer Heizzentrale zuzuführen. Die Wärmeverteilung erfolgt von der Heizzentrale über ein Nahwärmenetz, das entsprechende Kosten für die Rohrverlegung bis zum Endverbraucher verursacht. Die zentrale Wärmegewinnung mit einem nachfolgend angeschlossenen Nahwärmenetz, das auf einem relativ hohen Temperaturniveau betrieben wird, ist in der Verteilungsreichweite auf das nahe Umfeld zur Heizzentrale beschränkt.

Im Weiteren sind zwei geothermische Anlagen mit einem Nahwärmenetz realisiert, bei denen Trinkwasser zwar direkt über die Wärmepumpen-Verdampfer in den Heizzentralen geführt wird, aber die für den Wärmeentzug notwendige Wasserströmung wird durch eine ständige Trinkwasserzugabe und Versickerung bzw. Einleitung in einen Vorfluter oder Brunnen erzeugt wird. Dieses offene System hat einen erheblichen Trinkwasserverbrauch, womit erhebliche Kosten für die Förderung, Wiederaufbereitung von Wasser zu Trinkwasser und Einspeisung von Trinkwasser in ein Wassernetz verbunden sind. Auch bei diesen Anlagen ist die zentrale Wärmegewinnung mit den nachfolgend angeschlossenen, auf einem hohen Temperaturniveau betriebenen Nahwärmenetzen mit wirtschaftlichen Nachteilen aufgrund der Kosten für die Rohrverlegung und der geringen Reichweite der Verteilung zu den Wärmenergienutzern und der dadurch verursachten geringeren Anzahl der Versorgungseinheiten verbunden.

Es ist Aufgabe der Erfindung ein Verfahren der eingangs genannten Art und Vorrichtungen dazu zu schaffen, das bzw. die geeignet sind, die im oberflächennahen Untergrund gespeicherte Erdwärme durch und während des Regelbetriebes eines Wasserversorgungsnetzes zu verteilen und bei den Wärmenergienutzern dezentral mit hoher Effizienz mittels Direktverdampfung zu gewinnen.

Diese Aufgabe wird nach der Erfindung gemäß Anspruch 1 gelöst.

Dre Unteranspruch stellt eine vorteilhafte Ausgestaltung der verfahrensgemäßen Lösung dar.

Bei dem Verfahren zur Gewinnung von Erdwärme aus einem Wasserversorgungsnetz wird die Erdwärme durch die Wasservolumenströmung im erdverlegten Wasserversorgungsnetz aufgenommen und regeneriert. Der Erdwärme wird Wärmeenergie durch in einem Gebäude oder im Erdreich außerhalb des Gebäudes und/oder der Liegenschaft der Wärmenergienutzer eingebaute geothermische Vorrichtungen, insbesondere wie nachfolgend erläutert, entzogen und die Wärmeenergie wird durch ein aus dem Wasserversorgungsnetz, Versorgungsnetz-Nebenleitungen und Wärmepumpen-Verbindungsleitungen bestehenden Niedrigtemperatur-Verteilungsnetz zu den Liegenschaften der Wärmenergienutzer transportiert.

Ist ein Wärmetauscher separat zu einer Wärmepumpe installiert und durch Wärmepumpen-Verbindungsleitungen strömungstechnisch gekoppelt, wird selbstverständlich die Wärmeenergie durch Wärmepumpen-Verbindungsleitungen des Niedrigtemperatur-Verteilungsnetzes transportiert.

Wasser aus dem Wasserversorgungsnetz dient als Wärmequelle und Wärmeträgermedium, wobei ein Teil der Wasservolumenströmung in Rohrleitungen des Wasserversorgungsnetzes durch die angeschlossenen Versorgungsnetz-Nebenleitungen, insbesondere Bypass-Leitungen, umgeleitet wird, damit mindestens ein angeschlossener Wärmetauscher-Tank mit einer innen- oder außenliegenden von Kältemittel durchströmten Metallrohrleitung einer Absorbereinheit der geothermischen Vorrichtung durchströmt und das Kältemittel in der Absorbereinheit verdampft wird. Der Wärmetauscher-Tank kann als eigenständige externe Verdampfereinheit der Wärmepumpe fungieren oder in die Verdampfereinheit integriert sein. Es können beispielsweise so genannte konventionelle Wasser-Wasser-Wärmepumpen oder derzeit entwickelte $CO_2$- Wasser-Wasser-Wärmepumpen Verwendung finden, die sich nicht negativ auf die Qualität des Wassers in dem Wasserversorgungsnetz auswirken können.

Im Vergleich zu bekannten Erdwärmegewinnungsanlagen ist der technische, bauliche und betriebliche Aufwand wesentlich geringer, da Wasserversorgungsnetze als wichtigste Komponente flächendeckend vorhanden sind. Entsprechend wird eine effiziente und wirtschaftliche Wärmeenergiegewinnung und - verteilung erzielt, insbesondere auch aufgrund der dezentralen Wärmegewinnung mit vorgeschaltetem Niedrigtemperatur-Wärmeverteilungsnetz gegenüber der konventionellen zentralen Wärmegewinnung mit nachgeschaltetem Hochtemperatur-Wärmeverteilungsnetz. Darüber hinaus führt die Direktverdampfung des Kältemittels an der Wärmequelle zu einer gesteigerten Energieausbeute, die sich in höheren Leistungs- und Jahresarbeitszahlen der Wärmepumpen im Vergleich zu konventionellen Anlagen niederschlägt. Vorteile gegenüber dem Stand der Technik ergeben sich auch durch die Einsparung von Hilfsenergiekosten für Pumpenanlagen, die weder für die Wasserströmung im Wasserversorgungsnetz noch für den Kältemittelkreislauf zwingend notwendig sind.

Eine geothermische Vorrichtung zur Durchführung des zuvor beschriebenen Verfahrens besteht aus

- einer im Erdreich verlegten Bypass-Leitung, durch die ein Teil einer Volumenströmung von Wasser parallel zu einer Rohrleitung eines Wasserversorgungsnetzes fließt,
- einem innerhalb der Bypass-Leitung im Erdreich eingebauten Wärmetauscher-Tank, der als Druckwasser-Durchflußtank mit einem integrierten innenliegenden abgekapselten Absorber-Hohlraumsystem, insbesondere einer Metallrohrleitung, einer Absorbereinheit für ein Kältemittel ausgebildet ist,
- einer Verbindungsleitung für den flüssig-gasförmigen Kreislauf des Kältemittels zwischen der Absorbereinheit im Wärmetauscher-Tank und einer Wärmepumpe in einer Liegenschaft eines Wärmeenergienutzers, wobei
- das unten geschlossene wendelartige Absorber-Hohlraumsystem der Absorbereinheit geneigt oder vertikal in dem Wärmetauscher-Tank angeordnet ist, in das das Kältemittel im flüssigen Aggregatzustand von der oben angeschlossenen Verbindungsleitung kommend einströmt, schwerkraftbedingt nach unten sickert, dabei verdampft und als Gas in demselben Absorber-Hohlraumsystem wieder bis in die Verbindungsleitung und zur Wärmepumpe aufsteigt.

Durch einen vereinfachten Formelzusammenhang lässt sich für einen bestimmten Wärmeleistungsbedarf einer Liegenschaft und der hierfür notwendigen Wärmeentzugsleistung $W_L$ [W] die erforderliche Wasservolumenströmung durch den Wärmetauscher-Tank wie folgt abschätzen:

$$q = W_L \ / \ \rho_w \ * \ c_w \ * \ (T_1 - T_2) \qquad [m^3/s] \qquad (F1)$$

wobei

$T_1 > T_2$ mit
$T_1$ [K]: Temperatur des Versorgungswassers am Einlauf des Wärmetauscher-Tanks,
$T_2$ [K]: Temperatur des Versorgungswassers am Auslauf des Wärmetauscher-Tanks,
$\rho_w$ [kg/m$^3$]: Dichte des Wassers,
$c_w$ [Ws/kgK]: spezifische Wärmekapazität des Wassers.

Die Abschätzung des für diese Wasservolumenströmung q notwendigen Druckhöhengradienten bei gegebenem Wärmetauscher-Tank ergibt sich aus der vereinfachten hydraulischen Gleichung:

$$(H_1 - H_2) = q * L \ / \ A * k \ [m] \qquad (F2)$$

wobei $H_1 > H_2$ mit

$H_1$ [m]: Druckhöhe am Einlauf des Wärmetauscher-Tanks,
$H_2$ [m]: Druckhöhe am Auslauf des Wärmetauscher-Tanks,
$A$ [m$^2$] : Querschnittsfläche des Wärmetauscher-Tanks,
$L$ [m]: Länge des Wärmetauscher-Tanks,
$k$ [m/s]: Durchlässigkeitsbeiwert des Wärmetauschertanks.

Vorzugsweise ist zur Steuerung und Regelung der für den Wärmeentzug notwendigen Wasservolumenströmung im Wärmetauscher-Tank eine Drucksteigerungs-/-minderungsanlageanlage bzw. eine Pumpe oder ein Reduzierventil vorgesehen, die bzw. das auf der Basis mittels Temperatur-Sensoren am Einlauf und am Auslauf des Wärmetauscher-Tanks sowie einem Durchflußmengen-Meßgerät gewonnener Messdaten arbeitet.

Eine alternativ ausgestaltete geothermische Vorrichtung zur Durchführung des Verfahrens des oben erläuterten Verfahrens besteht aus:

- einer im Erdreich verlegten Bypass-Leitung, durch die ein Teil einer Volumenströmung von Wasser parallel zu einer Rohrleitung eines Wasserversorgungsnetzes fließt,
- einem innerhalb der Bypass-Leitung im Erdreich eingebauten unteren Wärmetauscher-Tank, der als Druckwasser-Durchflußtank mit einer integrierten innenliegenden Absorbereinheit für ein Kältemittel ausgebildet ist, wobei die Absorbereinheit eine vertikal innerhalb des Wärmetauscher-Tanks angeordnete geschlossene Metallrohrleitung umfasst,
- einem Abschlusstank, der oberhalb des Wärmetauscher-Tanks als Kopfende die Metallrohrleitung der unteren Absorbereinheit abschließt und zusammen mit einer den Abschlusstank spiralartig außen umschließenden oberen Absorber-Rohrleitung als oberer Wärmetauscher dient,
- einem unteren Kältemittel-Kreislauf, wobei der Wärmetransport in der Metallrohrleitung der unteren Absorbereinheit zwischen dem unteren Wärmetauscher-Tank und dem oberen Wärmetauscher durch verdampftes im Inneren der Metallrohrleitung aufsteigendes Kältemittel erfolgt, das im Abschlusstank des oberen Wärmetauschers kondensiert und als Flüssigkeitsfilm der Schwerkraft folgend an der Innenwandung der Metallrohrleitung im Gegenstrom zu dem aufsteigenden dampfförmigen Kältemittel nach unten fließt, und
- einem oberen Kältemittel-Kreislauf mit jeweils einer zwischen dem Abschlusstank des oberen Wärmetauschers und der Wärmepumpe angeordneten Hin- und Rückleitung.

Zweckmäßigerweise ist mindestens eine Bypass-Leitung zwischen Teilbereichen des Wasserversorgungsnetzes zum Anschluss des Wärmetauscher-Tanks und/oder mindestens eine Umwälzpumpe oder Drucksteigerungsanlage und/oder eine Ringschlussleitung in dem Wasserversorgungsnetz vorhanden. Aufgrund der Erzeugung einer Umlaufströmung, beispielsweise mittels Umwälzpumpen, gegebenenfalls durch die Ringschlussleitung, und Erhöhung der Wasservolumenströmung im Wasserversorgungsnetz und in den Bypass-Leitungen mit den zwischengeschalteten Wärmetauscher-Tanks wird die Wärmeentzugsleistung gesteigert.

Zur weitergehenden Steigerung der Wärmeaufnahme- und Wärmeregenerationskapazität ist zur Umleitung des oberflächennahen Wasserversorgungsnetzes in ein Bohrloch ein aus einem thermisch an den Untergrund angekoppelten geschlossenen Außenrohr und einem darin angeordneten unten offenem Innenrohr bestehendes koaxiales Vollrohr-Leitungssystem vorgesehen, durch das der Wasservolumenstrom strömt. Demnach wird das oberflächennahe Wasserversorgungsnetz in die Tiefe geleitet.

Bevorzugt ist eine mit einem Generator gekoppelte Turbine in den Wärmetauscher-Tank oder die Bypass-Leitung integriert. Unter Nutzung der zeitlich variierenden Druckhöhendifferenz im Wasserversorgungsnetz und der hierdurch induzierten Wasservolumenströmung ist die Gewinnung elektrischer Energie möglich.

Die im oberflächennahen Untergrund gespeicherte Erdwärme wird durch und während des Regelbetriebes eines Wasserversorgungsnetzes verteilt und bei den Wärmeenergienutzern, nämlich in oder bei so genannten Wärmenutzungs-Liegenschaften, dezentral mit hoher Effizienz mittels Direktverdampfung gewonnen. Hierzu werden Teile der Wasservolumenströmung des Wasserversorgungsnetzes über Bypass-Leitungen zu Wärmetauscher-Tank mit integrierter geneigter oder vertikaler Metallrohrleitung einer Absorbereinheit umgeleitet. Darin wird zum Wärmeentzug aus dem Wasser ein von der Wärmepumpe über die Verbindungsleitung einströmendes, nichtwassergefährdendes flüssiges Kältemittel direkt verdampft und der Wärmetransport über das gasförmige Kältemittel im Gegenstrom auf demselben Rohrleitungs-Rückweg zur Wärmepumpe bewerkstelligt. Die Erfindung stellt eine einfache und wenig aufwendige Technik zur quasi-kohlendioxidfreien Gewinnung regenerativer Erdwärmeenergie bereit und kann insbesondere in städtischen Gebieten mit vielen Wärmenutzungs-Liegenschaften wirtschaftlich für den Heiz- und Warmwasserbedarf oder Kühlzwecke eingesetzt werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:

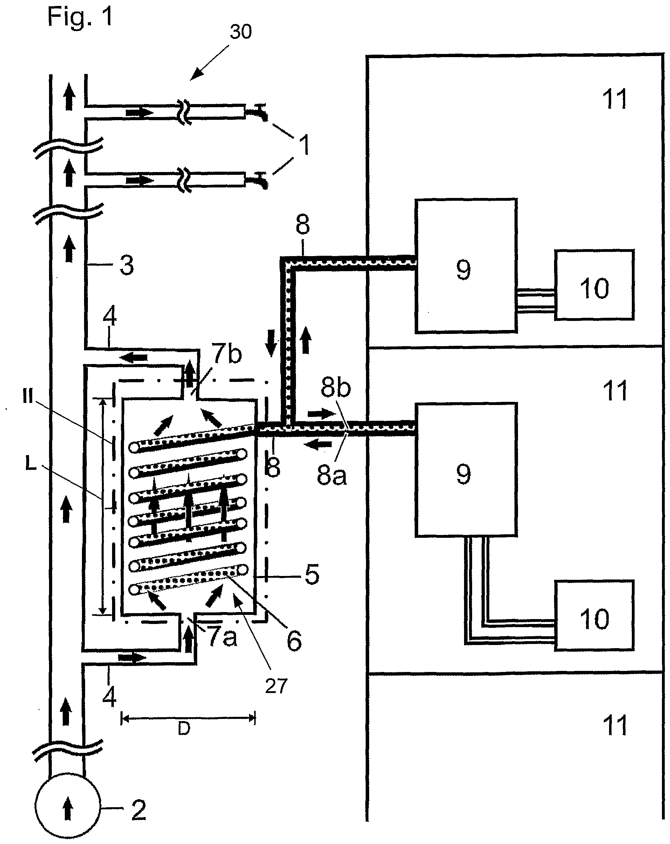

Fig. 1. eine Draufsicht auf schematisch dargestellte Kompo-nenten einer geothermischen Vorrichtung mit Elementen des erfindungsgemäßen Verfahrens,

Fig.2 eine perspektivische Darstellung der Einzelheit II nach Fig. 1,

Fig.3 eine Schnittdarstellung einer alternativen geothermischen Vorrichtung mit Elementen des erfindungsgemässen Verfahrens,

Fig.4 eine Schnittdarstellung einer geothermischen Vorrichtung in einer weiteren alternativen Ausgestaltung, die nicht von den Ansprüchen umfasst ist,

Fig.5 eine Teildarstellung einer geothermischen Vorrichtung in einer vierten alternativen Ausgestaltung im Schnitt, die nicht von den Ansprüchen umfasst ist und

Fig.6 eine schematische Darstellung einer geothermischen Vorrichtung in einer erfindungsgemässen Ausgestaltung.

Zur Gewinnung von Erdwärmeenergie aus einem Wasserversorgungsnetz 30 wird die durch einen an Wasserverbrauchsstellen 1 entstehenden Wasserverbrauch, eine an Neuwasserzugabestellen 2 vorgenommene Neuwasserzugabe und eine Druckhöhendifferenz erzeugte und in einem städtischen Bereich des Wasserversorgungsnetzes 30 ständig vorherrschende Wasservolumenströmung q in Rohrleitungen 3 des Wasserversorgungsnetzes 30 genutzt.

Aufgrund der Umleitung eines Teils dieser Wasservolumenströmung q durch eine an die Rohrleitung 3 des Wasserversorgungsnetzes 30 angeschlossene Bypass-Leitung 4 und einen in die Bypass-Leitung 4 geschalteten, erdeingebauten Wärmetauscher-Tank 5, der als Druckwasser-Durchflußtank ausgeführt ist, wird dem Wärmeträgermedium Wasser Wärmeenergie mittels einer in dem Wärmetauscher-Tank 5 geneigt angeordneten, wendelartig geformten und aus Edelstahl bestehenden Metallrohrleitung 6 einer Absorbereinheit 27 durch konduktiven Wärmetransport und Direktverdampfung eines Kältemittels entzogen, so dass das Wasser von z.B. einer Eintrittstemperatur $T_1$ = 283 K (10° C) an einem Einlauf 7a des Wärmetauscher-Tanks 5 auf $T_2$ = 280 K (7° C) an einem Auslauf 7b abgekühlt wird.

Der Kältemittelkreislauf umfasst einen Zulauf 8a des flüssigen Kältemittels, z.B. nichtwassergefährdendes unter Hochdruck stehendes Kohlendioxid, von einer Wärmepumpe 9 über eine Verbindungsleitung 8 zu einem oberen Teil des als Metallrohrleitung 6 ausgebildeten abgekapselten Absorber-Hohlraumsystems der Absorbereinheit 27 im Wärmetauscher-Tank 5, die Verdampfung des Kältemittels während des schwerkraftbedingten Hinabfließens des flüssigen Kältemittels in der Metallrohrleitung 6 und den Aufstieg des leichteren gasförmigen Kältemittels in derselben Metallrohrleitung 6 zurück in die Verbindungsleitungen 8 bis zu den Wärmepumpen 9, in denen die Wärmeenergie gewonnen, das gasförmige Kältemittel kondensiert und der Kreislauf von vorne beginnt. Sind mehrere Wärmepumpen 9 vorhanden, sind diese mit einer entsprechenden Anzahl von Verbindungsleitungen mit der Absorbereinheit 27 bzw. dem Wärmetauscher-Tank 5 gekoppelt.

Bei einem Wärmeleistungsbedarf für Heiz- und Warmwasserzwecke von Verbrauchern 10 in zwei Gebäuden 11 von Wärmeenergienutzern mit insgesamt ca. 60 kW soll beispielsweise eine Entzugsleistung aus dem Wasserversorgungsnetz von etwa 45 kW notwendig sein. Nach der folgenden Formel F1 ergibt sich die hierzu notwendige Wasservolumenströmung in dem m Wärmetauscher-Tank 5

$$q = W_L / \rho_w * c_w * (T_1 - T_2)$$
$$= 45000 \; / \; 1000 \; * \; 4250 \; * \; (283 \; - \; 280)$$
$$= 0,00353 \; m^3/s$$

Daraus ergibt sich nach der nachstehenden Formel F2 bei einem zylinderförmigen Wärmetauscher-Tank 5 mit einem Durchmesser D = 1 m und einer daraus resultierenden Querschnittsfläche A = 0,785 $m^2$, einer Länge L = 2 m und einem Durchlässigkeitswert von k = 0,5 m/s für den hydraulischen Druckhöhengradienten zwischen dem Einlauf 7a und dem Auslauf 7b ein Druckhöhenunterschied von

$$(H_1 - H_2) = q * L / A * k$$
$$= 0,00353 \; * \; 2 \; / \; 0,785 \; * \; 0,5$$
$$= 0,018 \; m$$

Solche Strömungsraten und Druckhöhenunterschiede sind i.d.R. in städtischen Versorgungsgebieten mindestens durchschnittlich vorhanden bzw. können durch Variation der Temperaturdifferenz und der Parameter der Wärmetauscher-Tanks 5 bzw. durch den Einsatz von Umwälzpumpen den Gegebenheiten angepasst und optimiert werden.

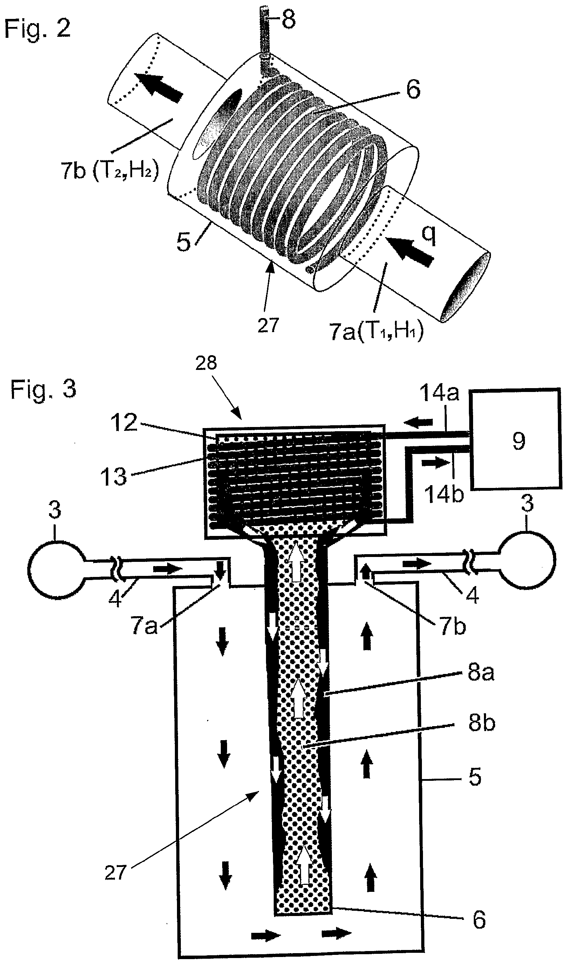

Nach Fig. 3 besteht die geothermische Vorrichtung im Wesentlichen aus dem Wärmetauscher-Tank 5, in den die Metallrohrleitung 6 der Absorbereinrichtung 27 für das flüssige und gasförmige Kältemittel hineinragt. Der Wärmetauscher-Tank 5 ist über den Einlauf 7a und den Auslauf 7b der Bypassleitung 4 an die Rohrleitung 3 des Wasserversorgungsnetzes 30 angeschlossen. Darüber hinaus ist ein oberer Wärmetauscher 28 vorgesehen, der einen zweiten Kältemittel-Kreislauf, bestehend aus einem Abschlusstank 12 am Kopfende der Metallrohrleitung 6 der Absorbereinrichtung 27 und einer den Abschlusstank 12 außen umschließenden spiralartigen Absorber-Rohrleitung 13 umfasst, die über eine Hinleitung 14a und eine Rückleitung 14b mit der Wärmepumpe 9 in Verbindung steht, umfasst.

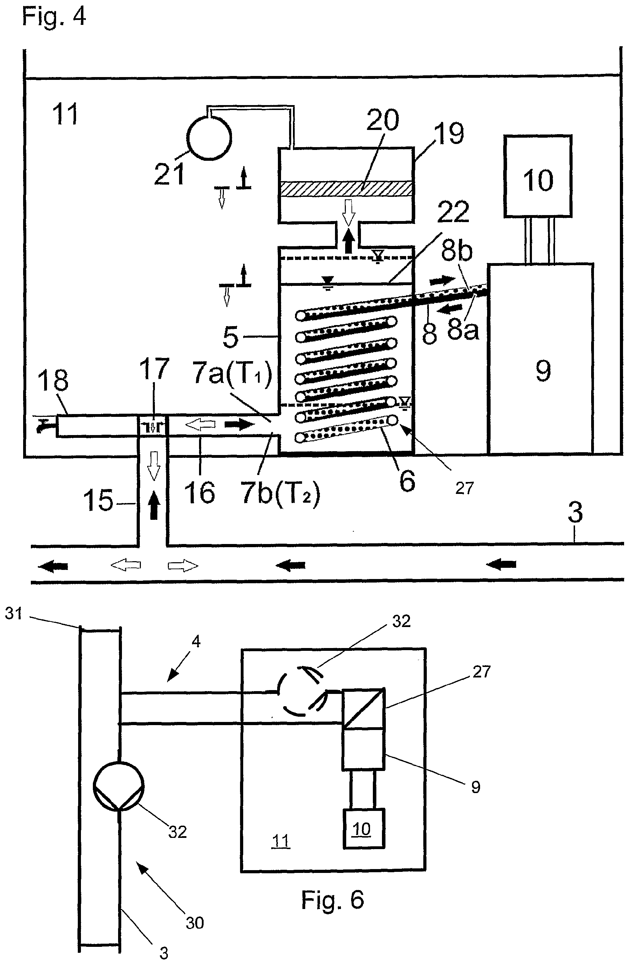

Innerhalb der ein Gebäude 11 umfassenden Liegenschaft eines Wärmeenergienutzers gemäß Fig. 4 ist der Wärmetauscher-Tank 5 mit der darin vertikal wendelartig angeordneten Metallrohrleitung 6 der Absorbereinheit 27, die Wärmepumpe 9 sowie in einem Heiz- und Warmwasser-Kreislauf angeordnete Verbraucher 10 installiert. Der Wärmetauscher-Tank 5 steht über die Verbindungsleitungen 8 für das Kältemittel mit der Wärmepumpe 9 in Verbindung, die gemeinsam mit den Verbrauchern 10 an den Heiz- und Warmwasser-Kreislauf angeschlossen ist.

Die Rohrleitung 3 des Wasserversorgungsnetzes 30 ist über eine Hausanschlussleitung 15 und eine Hausleitung 16 mit dem Wärmetauscher-Tank 5 verbunden. Die Befüllung und Entleerung des Wärmetauscher-Tanks 5 mit dem Wasser aus dem Wasserversorgungsnetz 30 erfolgt in zeitlich aufeinander folgenden Phasen, die über ein Dreiwegeventil 17 zwischen der Hausanschlussleitung 15, der die Hausanschlussleitung 15 mit dem Wärmetauscher-Tank 5 verbindenden Hausleitung 16 und einer Wasserverbrauchsleitung 18 gesteuert und geregelt werden. Der Wärmetauscher-Tank 5 steht an seiner Oberseite mit einer Drucklufteinrichtung, bestehend aus einem Druckluft-Speicherbehältnis 19 mit einem darin aufgenommenen Kolben 20 und einer daran angeschlossenen Druckluftsteigerungs-/-minderungsanlage 21 in Verbindung. Durch die Befüllung und Entleerung des Wärmetauscher-Tanks 5 wird der Wasserspiegel 22 im Wärmetauscher-Tank 5 mit dem darunter liegenden Wasser und dem darüber liegenden Druckluftpolster auf und ab bewegt und dabei wird Wärme über die Verdampfung des Kältemittels in der Absorbereinheit 27 entzogen.

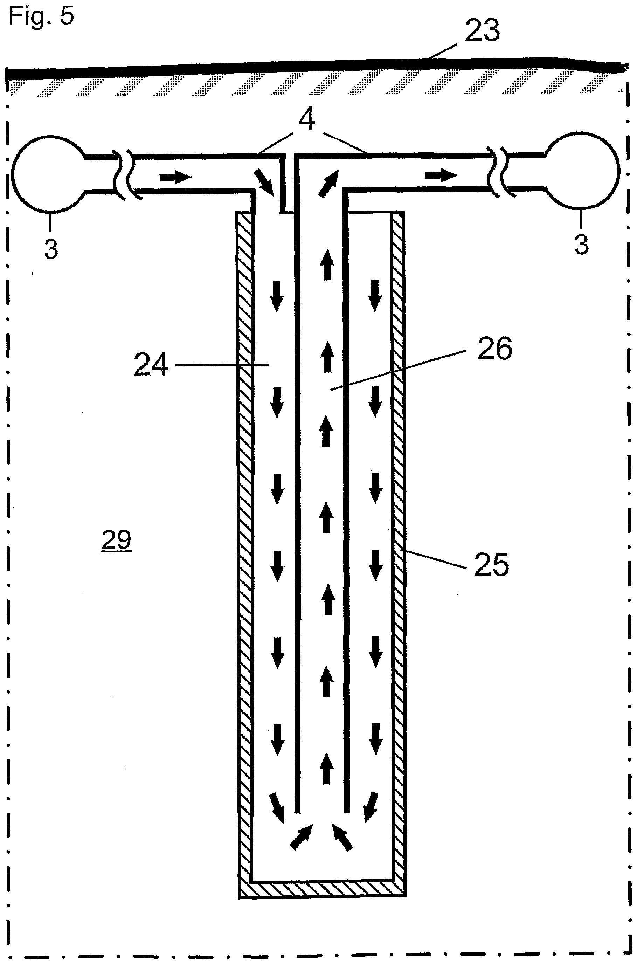

Entsprechend Fig. 5 ist unterhalb einer Geländeoberfläche 23 ein vertikales Bohrloch 29 ausgebildet, in das ein koaxiales Vollrohrsystem, bestehend aus einem geschlossenen Außenrohr 24 mit einer Zement-Bentonit Ummantelung 25 zur thermischen Ankopplung an das Untergrund-Gebirge und einem unten offenen Innenrohr 26, eingesetzt ist. Das Außenrohr 24 und das Innenrohr 26 stehen über die Bypass-Leitung 4 mit der Rohrleitung 3 des Wasserversorgungsnetzes 30 in Verbindung, so dass ein Teil der Wasservolumenströmung aus der Rohrleitung 3 des Wasserversorgungsnetzes 30 im Außenrohr 24 in die Tiefe hinabgeleitet wird, dabei Erdwärme entzieht und im zentralen Innenrohr 26 wieder hoch geleitet wird.

Nach Fig. 6 ist die Rohrleitung 3 des Wasserversorgungsnetzes 30 mit einer Ringschlussleitung 31 gekoppelt, wobei in die Rohrleitung 3 eine Umwälzpumpe 32 zur Erzeugung der Wasservolumenströmung eingesetzt ist, die selbstverständlich, wie durch die gestrichelte Linie angedeutet, auch der Bypass-Leitung 4 der Liegenschaft der Wärmeenergienutzer zugeordnet sein kann. In dem Gebäude 11 befindet sich die Wärmepumpe 9, die einteilig mit dem Absorber 27 ausgebildet ist.

**Patentansprüche**

1. Verfahren zur Gewinnung von Erdwärme aus einem Wasserversorgungsnetz (30), wobei

   - die Erdwärme durch eine Wasservolumenströmung im erdverlegten Wasserversorgungsnetz (30) aufgenommen und regeneriert wird,
   - das Wasser durch mindestens eine Bypass-Leitung (4) zwischen Teilbereichen des Wasserversorgungsnetzes (30) zum Anschluss eines Wärmetauscher-Tanks (5) und mindestens einer Umwälzpumpe (32) und eine eine Rohrleitung (3) des Wasserversorgungsnetzes (30) koppelnde Ringschlussleitung (31) in dem Wasserversorgungsnetz (30) zur Erzeugung einer Umlaufströmung und Erhöhung der Wasservolumenströmung in dem Wasserversorgungsnetz (30) geleitet wird,
   - die Wärmeenergie durch ein aus dem Wasserversorgungsnetz (30) und Versorgungsnetz-Nebenleitungen sowie Wärmepumpen-Verbindungsleitungen bestehenden Niedrigtemperatur-Verteilungsnetz zu den Liegenschaften der Wärmeenergienutzer mit den Gebäuden (11) transportiert wird,
   - der Erdwärme Wärmeenergie durch in einem Gebäude (11) oder im Erdreich der Wärmeenergienutzer oder benachbart dazu eingebaute geothermische Vorrichtungen entzogen wird,
   - die Wärmeenergie für den Heiz- und Warmwasserbedarf mittels dezentraler Wärmepumpen (9) bei den am Wasserversorgungsnetz (30) anliegenden Wärmeenergienutzern gewonnen wird,
   - Wasser aus dem Wasserversorgungsnetz (30) als Wärmequelle und Wärmeträgermedium dient, wobei ein Teil der Wasservolumenströmung in den Rohrleitungen (3) des Wasserversorgungsnetzes (30) durch die angeschlossenen Versorgungsnetz-Nebenleitungen, die als Bypass-Leitungen (4) ausgebildet sind, umgeleitet wird, damit der angeschlossene Wärmetauscher-Tank (5) mit einem innen- oder außenliegenden von Kältemittel durchströmten, abgekapselten Absorber-Hohlraumsystem einer Absorbereinheit (27) der geothermischen Vorrichtung in Form einer Metallrohrleitung (6) durchströmt und das Kältemittel in der Absorbereinheit (27) verdampft wird und
   - das nicht wassergefährdende Kältemittel zum Wärmetransport im geschlossenen Kreislauf durch mindestens eine Verbindungsleitung (8) von dem Wärmetauscher-Tank (5) zur Wärmepumpe (9) geführt wird, **dadurch gekennzeichnet, dass** eine Umwälzpumpe (32) in die Rohrleitung (3) eingesetzt ist.

2. Verfahren nach Anspruch 1, **dadurch gekennzeichnet, dass** für die Wärmegewinnung Wasservolumina verwendet werden, die maximal dem Wasserverbrauch im Wasserversorgungsnetz (30) entsprechen.

**Claims**

1. Method for obtaining geothermal energy from a water supply network (30), wherein

   - the geothermal energy is absorbed and regenerated by a water volume flow in the underground water supply network (30),
   - the water is conducted through at least one bypass line (4) between sub-regions of the water supply network (30), for the connection of a heat exchanger tank (5) and at least one circulating pump (32), and a ring closure line (31), coupling a pipeline (3) of the water supply network (30), in the water supply network (30), for generating a circulating flow and increasing the water volume flow in the water supply network (30),
   - the heat energy is transported to the properties of the heat energy users with the buildings (11) through a low-temperature distribution network, which consists of the water supply network (30) and supply network secondary lines and also heat pump connection lines,
   - heat energy is extracted from the geothermal energy by geothermal devices installed in a building (11) or in the earth of the heat energy users or adjacent thereto,
   - the heat energy for the heating and warm-water requirement is obtained by means of decentralized heat pumps (9) at the heat energy users present at the water supply network (30),
   - water from the water supply network (30) serves as heat source and heat carrier medium, wherein a part of the water volume flow in the pipelines (3) of the water supply network (30) is diverted through the connected supply network secondary lines, which are formed as bypass lines (4), in order that the connected heat exchanger tank (5), with an internal or external encapsulated absorber cavity system, through which refrigerant flows, of an absorber unit (27) of the geothermal device, in the form of a metal pipeline (6), is flowed through and the refrigerant in the absorber unit (27) is evaporated, and
   - the non-water-endangering refrigerant is, for the transport of heat, conducted in a closed circuit through at least one connection line (8) from the heat exchanger tank (5) to the heat pump (9),

   **characterized in that** a circulating pump (32) is installed in the pipeline (3).

2. Method according to Claim 1, **characterized in that**, for the obtaining of the heat, use is made of water volumes which correspond at most to the water consumption in the water supply network (30).


**Revendications**

1. Procédé pour récupérer de l'énergie géothermique à partir d'un réseau de distribution d'eau (30), dans lequel

   - l'énergie géothermique est captée et régénérée par un écoulement de volume d'eau dans le réseau de distribution d'eau enterré (30),
   - l'eau est conduite par au moins une conduite de dérivation (4) entre des régions partielles du réseau de distribution d'eau (30) pour le raccordement d'un réservoir d'échangeur de chaleur (5) et d'au moins une pompe de circulation (32) et une conduite de bouclage (31) couplant une canalisation (3) du réseau de distribution d'eau (30) dans le réseau de distribution d'eau (30) pour la production d'un écoulement de circulation et l'augmentation de l'écoulement de volume d'eau dans le réseau de distribution d'eau (30),
   - l'énergie thermique est transportée par un réseau de distribution à basse température se composant du réseau de distribution d'eau (30) et de conduites auxiliaires du réseau de distribution ainsi que de conduites de raccordement de pompes à chaleur vers les immeubles des utilisateurs d'énergie thermique avec les bâtiments (11),
   - de l'énergie thermique est extraite de l'énergie géothermique par des dispositifs géothermiques installés dans un bâtiment (11) ou dans le terrain des utilisateurs d'énergie thermique ou à proximité de celui-ci,
   - l'énergie thermique pour les demandes de chauffage et d'eau chaude est récupérée au moyen de pompes à chaleur décentralisées (9) chez les utilisateurs d'énergie thermique reliés au réseau de distribution d'eau (30),
   - de l'eau tirée du réseau de distribution d'eau (30) sert de source de chaleur et de fluide caloporteur, dans lequel une partie de l'écoulement de volume d'eau est déviée dans les canalisations (3) du réseau de distribution d'eau (30) par les conduites auxiliaires du réseau de distribution raccordées, qui forment des conduites de dérivation (4), afin que le réservoir d'échangeur de chaleur raccordé (5) avec un système de cavité d'absorbeur d'une unité d'absorbeur (27) du dispositif géothermique sous la forme d'une canalisation métallique (6), encapsulé, situé à l'intérieur ou à l'extérieur et parcouru par un agent réfrigérant, soit parcouru et que l'agent réfrigérant soit vaporisé dans l'unité d'absorbeur (27), et

- l'agent réfrigérant non incompatible avec l'eau est conduit pour le transport de chaleur en circuit fermé par au moins une conduite de raccordement (8) du réservoir d'échangeur de chaleur (5) à la pompe à chaleur (9),

**caractérisé en ce qu'**une pompe de circulation (32) est montée dans la canalisation (3).

2. Procédé selon la revendication 1, **caractérisé en ce que** l'on utilise pour la récupération de chaleur des volumes d'eau, qui correspondent au maximum à la consommation d'eau dans le réseau de distribution d'eau (30) .

Fig. 1

Fig. 2

Fig. 3

Fig. 4

Fig. 6

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6041613 A
- CA 2541378 A1
- DE 2930484 A1